# EUROPÄISCHE PATENTANMELDUNG

(11) **EP 0 531 928 A2**
(43) Veröffentlichungstag der Anmeldung: **17.03.1993**
(21) Anmeldenummer: 92115328.4
(22) Anmeldetag: 08.09.1992
(51) Int. Cl.: B67D 5/02, B67D 5/365, B67D 5/60, F16N 31/00

(54) **Einrichtung zum Sammeln der Flüssigkeit mehrerer Quellen in einem Sammelbehälter**

(30) Priorität: 11.09.1991 DE 4130235
(71) Anmelder: ITT Automotive Europe GmbH, D-60488 Frankfurt (DE)
(72) Erfinder: Curati, Roberto, W-6070 Langen (DE)
(74) Vertreter: Portwich, Peter

(57) **Zusammenfassung**

Die Erfindung betrifft eine Einrichtung zum Sammeln der Flüssigkeit mehrerer Druckmittelquellen in einem zentralen Sammelbehälter. Aufgabe der Erfindung ist es, eine Einrichtung vorzuschlagen, die eine preiswerte und einfache Entsorgung bzw. Trockenlegung von Fahrzeugen bzw. Bauteilen (Bremsen) gestattet.

Die Erfindung besteht im Prinzip darin, mehrere Leitungen (34) sternförmig über einen Verteilerkopf (30) oder reihenförmig über geeignete Anschlußstellen miteinander zu verbinden, wodurch in einem geschlossenen System eine große Anzahl von Druckmittelquellen in kurzer Zeit geleert (Trockenlegung von Bremsen) oder auch in weiter entfernt von dem zentralen Sammelbehälter befindliche Auffangbehälter entleert werden können.

## Beschreibung

Die Erfindung betrifft eine Einrichtung zum Sammeln einer Flüssigkeit in einem zentralen Sammelbehälter. Durch die wachsende Bedeutung des Umweltschutzes ist es nicht nur immer wichtiger geworden, industriell benutzte Flüssigkeiten zu sammeln und zentral zu erfassen. Eine derartige Erfassung kann sehr erleichtert oder auch vielfach erst dann nur ermöglicht werden, wenn die Stoffe sortenrein gesammelt werden, da andernfalls die Verunreinigungen zu unüberwindbaren Problemen bei der Verarbeitung bzw. Rückgewinnung von Rohstoffen führen. Man ist daher bemüht, den Kreislauf der einzelnen Stoffe von dem anderer Stoffe möglichst getrennt zu halten und Verunreinigung über das Maß des betriebsbedingten Gebrauchs der Bremsflüssigkeit auszuschließen.

Zur Unterstützung eines derartigen geschlossenen Systems ist es aus der EP-OS 294 719 bekannt geworden, Auffangbehälter und Sammelbehälter mit aneinander angepaßten Anschlüssen zu versehen, wodurch ein Vermischen mit anderen Flüssigkeiten erschwert wird.

Zur Erleichterung und Beschleunigung des Sammelns der Flüssigkeiten ist aus dem deutschen Gebrauchsmuster G 9102774.8 weiterhin bekannt geworden, den Sammelbehälter mit einem Leitungssystem zu versehen, durch welches gleichzeitig mehrere Auffangbehälter mit dem Sammelbehälter verbunden werden können. Dabei ist das Leitungssystem über einen Schnellanschluß mit dem Sammelbehälter verbindbar, so daß sich einerseits das Leitungssystem schnell von dem Sammelbehälter lösen läßt, andererseits aber bei gleichen Schnellanschlüssen sowohl für den Anschluß des Leitungssystems als auch für die Auffangbehälter der Sammelbehälter sich nachträglich mit dem Leitungssystem ergänzen läßt.

Die Erfindung geht daher aus von einer Einrichtung der sich aus dem Oberbegriff des Hauptanspruchs ergebenen Gattung und hat sich zur Aufgabe gestellt, bei einer derartigen Einrichtung den einfachen Anschluß einer Vielzahl ggf. weiter von dem Sammelbehälter entfernt befindlicher Druckmittelquellen zu ermöglichen, wobei es sich um ein geschlossenes, eine schnelle Entleerung der Quellen ermöglichendes System handeln soll.

Die Erfindung schlägt hierfür zwei grundlegende Lösungen vor. Zum einen ist das Leitungssystem aus sternförmig mit dem Behälter verbunden Quellen gebildet, die über einen gemeinsamen Verteilerkopf Zugriff zu dem Sammelbehälter haben. Unter sternförmig ist dabei zu verstehen, daß das Leitungssystem aus Leitungen besteht, die in einem gemeinsamen Zentrum enden. Dabei können die Leitungen z.B. strahlenförmig verlaufen aber auch räumlich teilweise parallel verlaufen. Hierdurch können in besonders einfacher Weise mehrere an die Schläuche angeschlossene Quellen gleichzeitig über eigene Zuleitungen mit dem Sammelbehälter verbunden werden. Dabei wird ein vergleichsweise großer Strömungsquerschnitt für die Summe aller Quellen erreicht. Der Verteilerkopf ist, einschließlich des Schnellanschlusses, vorzugsweise aus dem Sammelbehälter herauslösbar, wobei die nach dem Herausschrauben so gebildete Öffnung zum Entleeren des Sammelbehälters durch die zuständige Entsorgungsfirma benutzt werden kann (s. DE-GM G9102774.8). Durch entsprechende Versiegelung, Schlüsselcodierungen und andere Maßnahmen kann sichergestellt werden, daß nur das vorgesehene Leitungssystem über den Schnellanschluß mit dem zugeordneten Sammelbehälter verbunden werden kann (s. Anspruch 2).

Für den Verteilerkopf ergibt sich eine besonders einfache Ausgestaltung in Anwendung der Merkmalskombination nach Anspruch 3. Dabei können die Zuleitungskanäle in einem 90° überschreitenden Winkel auf den Zentralkanal zulaufen. Damit wird ausgeschlossen, daß zwei senkrecht zum Zentralkanal verlaufende Zuleitungskanäle miteinander fluchten können und insbesondere für den Fall, daß einer der beiden Zuleitungskanäle gerade nicht benutzt wird, über diesen ein Teil der Flüssigkeit den Verteilerkopf verläßt, die von dem anderen Zuleitungskanal stammt.

Ein sehr einfaches System zum Anschließen der Quellen ergibt sich dadurch, daß die dem Verteilerkopf abgewandten Enden der Schläuche einfach auf Anschlußstifte der Flüssigkeitsquellen aufgesteckt werden. Hierzu empfehlen sich die aus Anspruch 4 ergebenden Maßnahmen. Hierdurch lassen sich die Durchmesser der Verbindungsschläuche in optimaler Weise an die miteinander zu verbindenden Elemente (Anschlußstifte, Anschlußstutzen) anpassen.

Um das Gewicht des Verteilerkopfes zu vermindern und diesen weitgehend vor Korrosion zu schützen, empfiehlt sich die Verwendung der Merkmale in Anspruch 5. Der Verteilerkopf kann dabei insbesondere die Form eines flachen Kreiszylinders haben, den die Zuleitungskanäle strahlenförmig von der Mantelfläche her durchdringen und so in den axial verlaufenden Zentralkanal münden.

Um zu erreichen, daß die Enden der gerade nicht benutzten Schläuche abgedichtet sind und an definierter Stelle dem Bedienungspersonal zum Anschluß weitere Quellen zur Verfügung stehen, empfiehlt sich die in Anspruch 6 angegebene Maßnahme. Hierdurch wird verhindert, daß die Enden der Schläuche lose vom Verteilerkopf herunterhängen, sich untereinander verwirren und daß die zu sammelnde Flüssigkeit zum Teil aus den Enden austreten kann.

Eine zur Anordnung der Aufnahmenippel geeignete Fläche ist in Anspruch 7 angegeben.

Eine weitere Lösung für die erfindungsgemäße Aufgabenstellung ergibt sich aus der Merkmalskombination nach Anspruch 9. Diese Lösung besteht im Prinzip darin, die einzelnen mit den zu entleerenden Quellen zu verbindenden Rohre bzw. Schläuche hintereinander in Reihe zu schalten, wobei die Anschlußstellen der Rohre bzw. Schläuche jeweils mit lösbaren Schnellverbindern versehen sind. Dabei können generell die flexiblen Schläuche durch stabile Rohre ersetzt sein, so daß unter den hier beschriebenen "Schläuchen" auch Rohre zu verstehen sind. Durch die sich summierenden Strecken der einzelnen Schläuche lassen sich auch weiter entfernt liegende Quellen in einfacher Weise mit dem Sammelbehälter verbinden, indem die Quelle an das ihr nächstliegende Schlauchende angeschlossen wird. Derartige miteinander verbundene Schläuche können sich also durch größere Werkstatthallen ziehen und ermöglichen so an mehreren Stellen die Verbindung der einzelnen Quellen mit einem zentralen Sammelbehälter.

In vorteilhafter Weiterbildung der Erfindung läßt sich ein derartiges Schlauchsystem an der Wand montieren indem insbesondere für eine stabile Halterung der Verbindungsstellen und damit der Schnellanbinder gesorgt wird. Die Verbindungsschläuche selber können mittels geeigneter Schellen dann an der Wand gehalten werden. Die Lösung mit den in Reihe geschalteten Schläuchen für große Werkstatthallen eignet sich insbesondere zur Verwendung besonders großer Sammelbehälter wie sie heute zum Teil schon in genormter Form in Gebrauch sind. Das gilt beispielsweise für die 1000-Liter-ASF- und KTC-Chemikalienbehälter. Bei den Rohren/Schläuchen können auch genormte Längen verwandt werden wie beispielsweise 3 m Stücke und 10 m Stücke.

Die erfindungsgemäßen Lösungen eignen sich insbesondere zur Verwendung bei Bremsflüssigkeit. Dabei können zum einen, insbesondere hinsichtlich der Lösungen nach Anspruch 9 und 10 Auffangbehälter, wie sie in dem o. g. Gebrauchsmuster beschrieben sind, in einen weit entfernt stehenden Sammelbehälter entleert werden. Die Erfindung ist aber auch geeignet, insbesondere mit der sich aus den Ansprüchen 1 bis 8 ergebenden Lösung, die Bremsen von Kraftfahrzeugen trockenzulegen, die beispielsweise für die Wiederverwertung ihrer Ausgangsmaterialien zerlegt (Schredderanlage) werden sollen. Für eine derartige Naßentsorgung ist insbesondere ein sich aus Anspruch 12 ergebendes Verfahren geeignet, bei dem die Schlauchenden mit den Entlüftungsventilen der Bremsen und/oder Kupplung und Lenkung des jeweiligen Fahrzeugs verbunden werden, so daß, selbst wenn die einzelnen Aggregate (Bremsen) mehr als ein Entlüftungsventil besitzen, gleichzeitig alle Aggregate (Bremsen) eines Fahrzeugs trockengelegt werden können. Hierdurch ergibt sich eine große Zeitersparnis und Arbeitsersparnis, da für das Trockenlegen sämtlicher Bremsen nur ein einziges Mal so lange Luftdruck auf den Ausgleichsbehälter gegeben werden muß bis die Bremsflüssigkeit aus den geöffneten Entlüftungsventilen ausgetreten ist und die Bremsen trockengelegt sind.

Ausführungsbeispiele der Erfindung werden nachfolgend anhand der Zeichnung erläutert. Darin zeigt:
- Fig. 1: einen Auffangbehälter, der über einen Schnellanschluß gemäß dem deutschen Gebrauchsmuster G 9102774 mit einem Sammelbehälter verbunden ist;
- Fig. 2: einen mit einem Verteilerkopf versehenen Auffangbehälter;
- Fig. 3: in skizzierter Form einen Verteilerkopf für einen Sammelbehälter gemäß Figur 1;
- Fig. 4: eine andere Darstellung eines Verteilerkopfes nach Fig. 3;
- Fig. 5: einen großvolumigen Sammelbehälter mit einem Leitungssystem in Serienschaltung gemäß der Erfindung;
- Fig. 6: in vergrößerter Darstellung eine Wandhalterung gemäß Fig. 5;
- Fig. 7: in vergrößerter Darstellung einen Auffangbehälter gemäß Fig. 1.

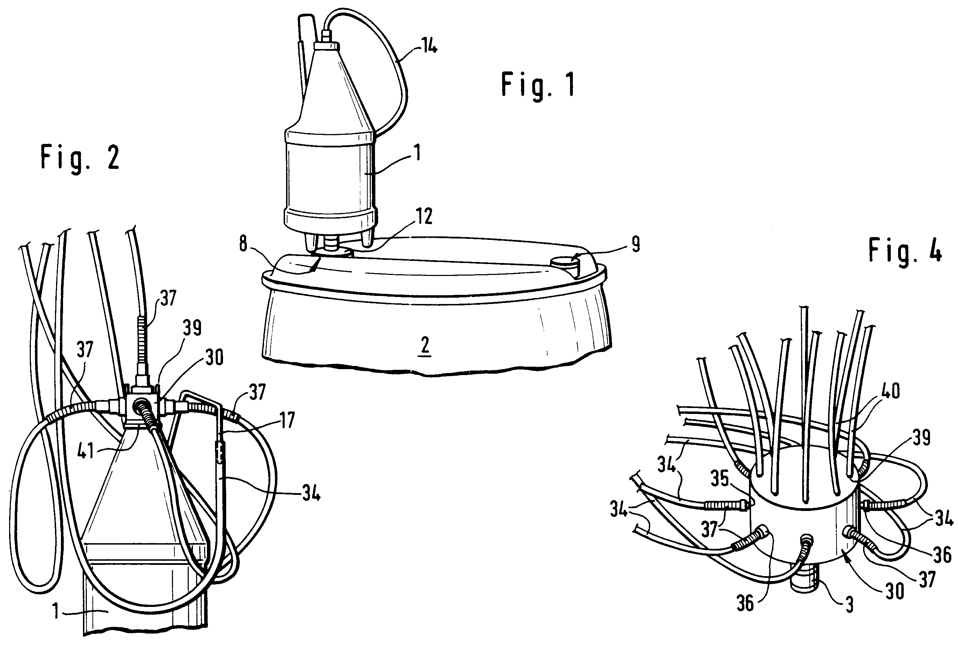

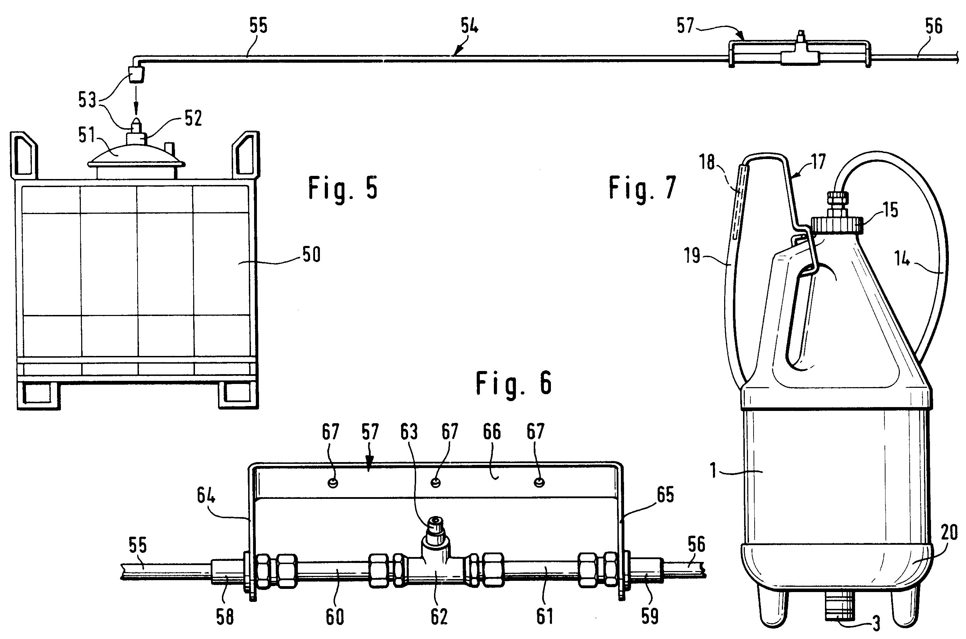

In Figur 1 ist ein Auffangbehälter 1 gezeigt, welcher über eine als Schnellanschluß 8 bezeichnete Schnellkupplung mit einem Sammelbehälter 2 verbunden ist. Der Schnellanschluß ermöglicht eine lösbare rastende Verbindung zwischen dem Auffangbehälter 1 und dem Sammelbehälter 2, wobei wegen der Anpassung der beiden Anschlußteile nur mit den entsprechenden Anschlußteilen versehene Auffangbehälter an den Sammelbehälter 2 angeschlossen werden können. Das weibliche Anschlußteil 3 ist aus Figur 7 ersichtlich. Der männliche Teil des Schnellanschlusses am Sammelbehälter 2 ist mit einer versiegelbaren Verschlußschraube 12 verbunden, die im Bedarfsfalle herausschraubbar ist. Der Behälter besitzt ferner ein Entlüftungsventil 9. Der Auffangbehälter ist weiterhin mit einem Auffangschlauch 14 versehen, der mit der zu entleerenden Druckmittelquelle verbunden werden kann. Wie aus Figur 7 ersichtlich, ist der in der Gebrauchsmusteranmeldung G 9102774 dargestellte Auffangbehälter mit einem Befestigungshaken 17 versehen, über welchen der Behälter an der Wand aufgehängt werden kann. Das Hakenende 18 dient gleichzeitig zum Sichern des Schlauchendes 19 (s. Figur 7) für den Fall, daß der Auffangschlauch 14 nicht in Betrieb ist. Der Auffangbehälter ist weiterhin noch mit einer versiegelbaren Behälterkappe 15 versehen, in die der Auffangschlauch 14 mündet. Einzelheiten hierzu ergeben sich aus der Gebrauchsmusteranmeldung G 9102774.

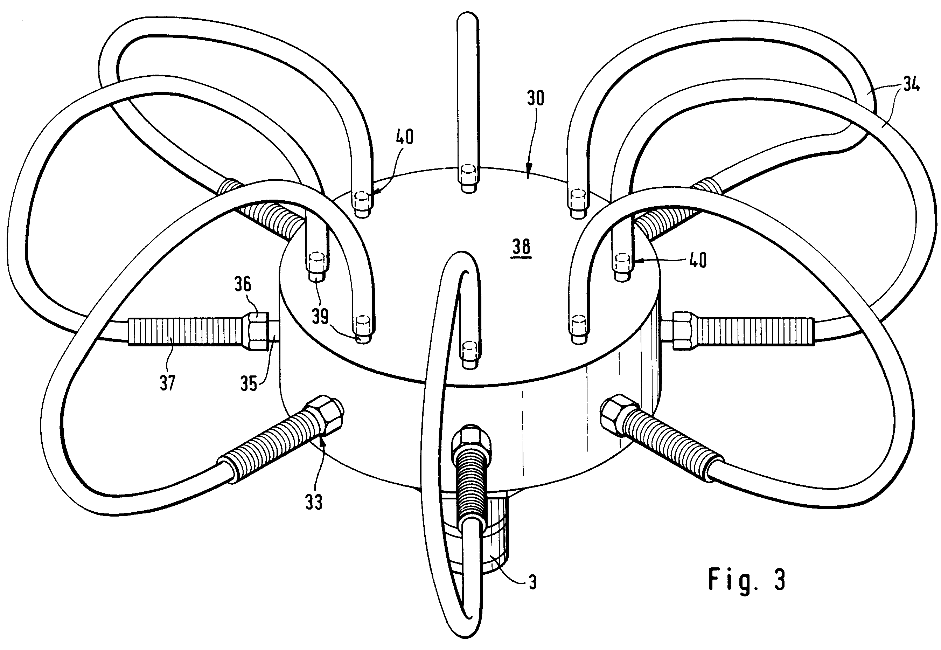

Figur 3 und 4 zeigen einen Verteilerkopf gemäß der Erfindung, wie er im Austausch zu dem Auffangbehälter 1 in Figur 1 auf den Sammelbehälter 2 aufsetzbar ist. Der Verteilerkopf 30 ist ein aus Leichtmetall, vorzugsweise Aluminium, hergestellter Kreiszylinder, in welchen die kopfseitigen Schlauchenden 33 der Schläuche 34 münden.

Dabei können beispielsweise in einen Verteilerkopf zwölf und mehr Schläuche münden. Es kann aber auch eine geringere Anzahl von Schläuchen für einen Verteilerkopf 30 vorgesehen sein (siehe z.B. Fig. 2). Dabei sind, wie aus Figur 4 ersichtlich, die kopfseitigen Schlauchenden auf in den Verteilerkopf eingeschraubte oder eingepreßte Anschlußstutzen 35 aufgezogen und mit Überwurfmuttern 36 gesichert, wobei die Überwurfmuttern gleichzeitig auch noch Knickschutzhüllen 37 für die Schläuche 34 tragen.

Die Anschlußstutzen 35 münden in als Zuleitungen dienende strahlenförmig angeordnete Bohrungen innerhalb des Verteilerkopfes 30, die im wesentlichen in einer Ebene liegen, aber auch auf der konisch nach unten geneigten Fläche eines Kegels liegen können. Die Zuleitungen, die aus der Zeichnung nicht ersichtlich sind, münden alle in einen in Figur 2 senkrecht nach oben ragenden Zentralkanal innerhalb des Verteilerkopfes 30, der mit der Mittelachse des Verteilerkopfes 30 fluchtet und nur einseitig in Figur 2 und 3 nach unten geöffnet ist. Der nach unten geöffnete Zentralkanal mündet in das weibliche Anschlußteil 3 eines Schnellanschlusses, der mit dem Anschlußteil 3 in Figur 7 vergleichbar ist. Auf diese Weise ist der Verteilerkopf 30 ebenso wie der Auffangbehälter 1 (s. Fig. 1) auf den Sammelbehälter 2 rastend aufsteckbar.

Um die Anschlußstutzen 35 abgewandten Enden der Schläuche 34 während des Zeitraums sichern zu können, in dem sie nicht benötigt werden, besitzt der Verteilerkopf 30 an seiner in Figur 3 und 4 oberen Stirnfläche 38 eine der Anzahl der Schläuche 34 entsprechende Anzahl von Aufnahmenippel 39, die von der Stirnfläche 38 in den beiden zuletzt genannten Figuren senkrecht abstehen. Die zylinderförmigen Aufnahmenippel 39 sind in ihrem Durchmesser derart dimensioniert, daß die äußeren Schlauchenden 40 der aus Plastik, insbesondere Silicon, bestehenden Schläuche 34 aufsteckbar und so gehalten sind. Dieses Prinzip ist mit der Halterung des Schlauchendes 19 an dem Hakenende 18 in Figur 7 vergleichbar.

In Figur 2 ist ein Verteilerkopf 30 gezeigt, der auf einen Auffangbehälter 1 aufgesetzt ist. Der Verteiler 30 hat im wesentlichen den Aufbau, wie er schon im Zusammenhang mit dem Verteilerkopf nach Figur 3 und 4 beschrieben wurde. Der wesentliche Unterschied besteht darin, daß gegenüber dem größeren Verteilerkopf nach Figur 3 und 4 eine verminderte Anzahl von Schläuchen von diesem abgeht. Außerdem ist der Verteilerkopf nicht, wie im Zusammenhang mit Figur 3 und 4 geschildert, durch einen Schnellanschluß (s. Schnellanschluß 8 nach Fig. 1 bzw. weibliches Anschlußteil 3 nach Fig. 3, 4 und 7) sondern mit einem versiegelten Schraubverschluß 41 versehen, welcher mit dem Schraubverschluß 15 nach Figur 7 vergleichbar ist, der dort den Auffangschlauch 14 mit dem Auffangbehälter 1 verbindet.

Der Vorteil des Verteilerkopfes 30 nach den Figuren 2 bis 4 besteht darin, daß gleichzeitig mehrere Quellen, wie sie beispielsweise mehrere Entlüftungsventile einer Kraftfahrzeug-Bremse bilden, entleert werden können. Die somit eingesammelte Flüssigkeit kann dann in einfacher Weise, wie in Figur 1 angedeutet, aus dem Auffangbehälter 1 in den Sammelbehälter 2 übergeben werden. Damit ergibt sich ein äußerst flexibles System, das durch Bereitstellung einer entsprechenden Anzahl von Auffangbehältern beliebig viele Quellen gleichzeitig entsorgen kann. Da aber die einzelnen Behälter versiegelt sind und durch entsprechende Verschlüsse bzw. an die Quellen angepaßte Schlauchenden nur bestimmte Flüssigkeiten ein- bzw. ausgefüllt werden können, handelt es sich gleichwohl um ein geschlossenes System, bei dem das unbeabsichtigte Zumischen fremder und auch damit das Recycling verhindernder Flüssigkeiten weitgehend verhindert ist.

In Figur 2 wurde parallel zu den Aufnahmenippeln 39 in der Mitte der oberen Stirnfläche des Verteilerkopfes 30 ein weiterer Anschlußstutzen mit zugehörigem Knickschutz 37 und Schlauch 34 installiert, so daß ein zusätzlicher Anschluß gegenüber den in die Mantelfläche mündenden Anschlüssen geschaffen wurde. Der besondere Vorteil liegt darin, daß der Zentralkanal als Durchgangsloch gebohrt werden kann, dessen dem Behälter 1 abgewandtes Ende mit dem zuletzt beschriebenen Anschlußstutzen verbunden ist.

Der Vorteil hierzu ist, daß die Verbindung mit dem Sammelbehälter nicht direkt, sondern über einen Auffangbehälter erfolgt, auf welchem der oben erwähnte Verteilerkopf fest montiert und versiegelt ist, wodurch die entsorgte Flüssigkeit bei Verwechslung mit Mineralöl, mit dem Aggregate betrieben werden können, an der direkten Einleitung mit Verschmutzung des gesamten Inhalts des Sammelbehälters gehindert wird.

Fig. 5 zeigt ein System mit in Reihe geschalteten Leitungen, die mit einem Großbehälter 50 verbunden sein können. Dieser Großbehälter besitzt an einem abschraubbaren Domdeckel das weibliche Anschlußteil 52 eines Schnellanschlusses 53.

Erfindungsgemäß kann nun statt an den Großbehälter 50 auch analog an den kleineren Sammelbehälter 2 gemäß Figur 1 ein Leitungssystem 54 angeschlossen werden, welches aus einer Anzahl in Reihe geschalteter Schläuche 55, 56 usw. besteht. Die einzelnen Schläuche sind über ortsfeste Halterungen 57 verbunden, welche nachfolgend in Verbindung mit Figur 6 näher erläutert werden.

Figur 6 zeigt in abgeschnittener Darstellung die Schläuche 55, 56, welche in Muffen 58, 59 münden. Diese Muffen 58, 59 gehen in Verbindungsstücke 60, 61 über, welche über ein Anschlußstück 62 miteinander verbunden sind.

Das Anschlußstück 62 trägt das männliche Anschlußteil 63, welches zu dem weiblichen Anschlußteil 3 beispielsweise eines Auffangbehälters 1 gemäß Figur 7 paßt. Die beiden Anschlußteile 3 und 63 bilden also Teile eines gemeinsamen Schnellanschlusses, so daß die Halterungen 57 im Prinzip die Anschlußaufgaben eines Sammelbehälters 2 übernehmen können. Das Leitungssystem 54 hat also die gleiche Wirkung wie eine ganze Reihe von in bestimmten Abständen zueinander aufgestellten Sammelbehältern in Figur 2, nur daß gleichzeitig die anfallende Flüssigkeit in einem Großbehälter 50 gesammelt ist, der sich kostengünstig transportieren und entsorgen läßt.

Zur Verbesserung des Systems ist die Anschlußstelle jeweils zwischen den Schläuchen 55, 56 und den zugehörigen Verbindungsstücken 60, 61 mit den Armen 64, 65 eines Wandhalters 66 verbunden. Der Wandhalter besitzt Öffnungen 67, mittels denen er an der Wand anschraubbar ist. Man erhält somit ein ortsfest installiertes Leitungssystem mit einer Reihe von an der Wand ortsfest installierten Anschlußteilen, deren räumlicher Abstand sich nach der Länge der verwendeten Schläuche 55, 56 richtet. Diese Schläuche werden in vorgegebenen Abmessungen (z.B. 3 m, 5 m, 10 m) bereitgehalten, so daß das Leitungssystem an die gegebenen Räumlichkeiten von Werkstätten und Fabriken in einfacher Weise angepaßt werden kann. Die Schläuche selbst werden in üblicher Weise durch Schellen an der Wand gehalten und über Winkelstücke um Deckenträger herumgeführt.

In der Regel wird der Schnellanschluß 53 andere Abmessungen haben als die durch die Anschlußteile 63 definierten Schnellanschlüsse.

Eine weitere Möglichkeit zur Verbesserung des Sammelsystems besteht in der Kombination der im Zusammenhang mit Figur 3 und 4 beschriebenen Verteilerköpfe mit dem Leitungssystem 54. Es ist daher möglich, auch die Verteilerköpfe 30 mit ihrem weiblichen Anschlußteil 3 auf die männlichen Anschlußteile 63 aufzusetzen, so daß ohne Zwischenschaltung eines Auffangbehälters direkt eine den Schläuchen 34 entsprechende Anzahl von Quellen über das Anschlußstück 62 entsorgt werden kann.

## Patentansprüche

1. Einrichtung zum Sammeln einer Flüssigkeit, bei der ein zentraler Sammelbehälter (2,50) über ein Leitungssystem (34,54) mit mehreren Quellen für die zu sammelnde Flüssigkeit verbindbar ist, wobei innerhalb des Leitungsweges (34,54) mindestens ein Schnellanschluß (8,63) angeordnet ist, über welchen die Quellen mit dem Behälter (2,50) verbindbar sind, dadurch **gekennzeichnet,** daß das Leitungssystem (34) aus mehreren Schläuchen gebildet ist, die von den Quellen sternförmig zu einem Verteilerkopf (30) laufen, und der Verteilerkopf (30) über einen Schnellanschluß (8) mit dem Sammelbehälter (2) verbunden ist (Fig. 1,3,4).

2. Einrichtung nach Anspruch 1, dadurch gekennzeichnet, daß ein erstes, vorzugsweise männliches Anschlußteil des Schnellanschlusses in den Sammelbehälter (2) lösbar eingeschraubt ist und über das zweite vorzugsweise weibliche Anschlußteil (3) der Verteilerkopf (30) ortsfest auf den Sammelbehälter (2) aufsetzbar ist.

3. Einrichtung nach Anspruch 1 oder 2, dadurch **gekennzeichnet,** daß der Verteilerkopf (30) sternförmig radial in einen Zentralkanal laufende Zuleitungskanäle aufweist, die nach außen in zugehörige Anschlußstutzen (35) münden.

4. Einrichtung nach Anspruch 3, dadurch **gekennzeichnet,** daß die Außendurchmesser der vorzugsweise konischen Anschlußstutzen (35), auf welche die Schläuche (34) gesteckt werden, ungefähr so groß sind wie die Anschlußstifte der Flüssigkeitsquellen, auf die die Schläuche (34) ebenfalls aufgesteckt werden.

5. Einrichtung nach Anspruch 3 oder 4, dadurch **gekennzeichnet,** daß der Verteilerkopf (30) aus einem Aluminiumzylinder gebildet ist, in dessen Längsachse der Zentralkanal verläuft und die Zuleitungen strahlenförmig und etwa in der Mittelebene des Zylinders verlaufend im wesentlichen senkrecht zum Zentralkanal stehen und in diesen münden.

6. Einrichtung nach einem der Ansprüche 1 bis 5, dadurch **gekennzeichnet,** daß zur Arretierung der den Anschlußstutzen abgewandten Enden vorübergehend nicht benutzter Schläuche auf dem Verteilerkopf Aufnahmenippel (39) verteilt angeordnet sind.

7. Einrichtung nach Anspruch 6, dadurch **gekennzeichnet,** daß die Aufnahmenippel (39) auf der dem Schnellanschluß (8) des Verteilerkopfes (30) abgewandten Stirnfläche (38) des Verteilerkopfes (30) kreisförmig angeordnet sind.

8. Einrichtung nach einem der Ansprüche 1 bis 7, dadurch **gekennzeichnet,** daß ein auf den Schnellanschluß (8) des Sammelbehälters (2) aufsetzbarer Auffangbehälter (1) mit einem Verteilerkopf (30) versehen ist.

9. Einrichtung zum Sammeln einer Flüssigkeit, bei der ein zentraler Sammelbehälter (50) über ein Leitungssystem (54) mit mehreren Quellen (1,30) für die zu sammelnde Flüssigkeit verbindbar ist, wobei innerhalb des Leitungsweges mindestens ein Schnellanschluß (63) angeordnet ist, über welchen die Quellen (1,30) mit dem Behälter (50) verbindbar sind, dadurch **gekennzeichnet,** daß die Rohre/Schläuche (55,56) hintereinander in Reihe geschaltet sind, daß an den Verbindungsstellen (57) der Rohre/Schläuche jeweils ein mit einem Ventil versehener Schnellanschluß (63) eingefügt ist, der den vorübergehenden Anschluß einer Flüssigkeitsquelle (1,63) gestattet, und daß das den Sammelbehälter (50) zugewandte Ende des Schlauchsystems mit dem Behälter über eine lösbare Schnellkupplung (53) verbunden ist.

10. Einrichtung nach Anspruch 9, dadurch **gekennzeichnet,** daß die Verbindungsstellen (57) der Schläuche (55,56) mit einer Wandhalterung (66) zur ortsfesten Halterung der den Verbindungsstellen (57) zugeordneten Schnellanschlüsse (63) versehen sind.

11. Einrichtung nach einem der Ansprüche 1 bis 10, dadurch **gekennzeichnet,** daß die Druckmittelquellen (1,30) vorzugsweise Bremsflüssigkeit enthaltende Baugruppen oder Behälter sind.

12. Verfahren zur Entsorgung von Bremsen, Kupplungen und/oder Lenkungen unter Verwendung einer Einrichtung nach einem der Ansprüche 1 bis 8, dadurch **gekennzeichnet,** daß die dem Verteilerkopf (30) abgewandten Schlauchenden (40) auf die ggf. mehreren Entlüftungsventile der Bremsen und anderer Aggregate eines Kraftfahrzeugs aufgesteckt werden, danach die angeschlossenen Ventile geöffnet und so lange Luftdruck auf den Einlaß des Ausgleichsbehälters gegeben wird, bis die Bremsflüssigkeit aus den Bremsen und Aggregaten in den Auffangbehälter oder den Sammelbehälter (1,2,50) gedrückt ist.

13. Verfahren zum gleichzeitigen Entleeren mehrerer Auffangbehälter (1) mittels einer Einrichtung nach einem der Ansprüche 9 bis 11, dadurch **gekennzeichnet,** daß die mit einem zu dem Schnellanschluß (63) an den betreffenden Verbindungstellen (57) passenden Auffangsbehälter (1) auf die zugehörigen Schnellanschlüsse (63) aufgesetzt werden, wodurch die Verbindung zwischen den betreffenden Auffangbehältern (1) und dem Leitungssystem (54) hergestellt wird.

14. Verteilerkopf (30) nach einem der Ansprüche 2 bis 7.

15. Leitungssystem (54) nach Anspruch 9 bis 10.
